# EUROPEAN PATENT APPLICATION

(11) **EP 4 191 224 A1**
(43) Date of publication of application: **07.06.2023**
(21) Application number: 21212378.0
(22) Date of filing: 03.12.2021
(51) Int. Cl.: G01N 1/28, B23H 9/16

(54) **METHOD AND SYSTEM FOR DETERMINING THE STRUCTURE OF A CONDUCTIVE MATERIAL**

(71) Applicant: Blueacre Technology Ltd, Dundalk Co. Louth (IE); The Provost, Fellows, Foundation Scholars, and The Other Members of Board, of The College of The Holy and Undivided Trinity of Queen Elizabeth, Dublin 2 (IE)
(72) Inventor: Gillen, David, Dundalk (IE); O Donnell, Garret, Trim (IE); Dunne, Paul, Dublin (IE); Smith, David, Portmarnock (IE); Fernández, Luis Andrés Romeral, Barcelona (ES); AL Harrasi, Mohamed Abdullah Hamad Gharib, Dundalk (IE)
(74) Representative: Tomkins & Co

(57) **Abstract**

A method of, and system for, determining the structure of a conductive material comprising: a. providing a workpiece formed from the conductive material wherein the workpiece has a first surface, b. removing conductive material from the first surface to form a second surface by means of a charged electrolytic jet which is ejected from a nozzle, c. imaging the second surface to produce an image of the second surface.

## Description

### Field of the Invention

The present invention also relates to a method of, and a system for, determining the structure of a conductive material.

### Background to the Invention

Standard methods of revealing structures of conductive materials such as metals require testing processes which add stress, such as mechanical or thermal stress, to the sample to be tested. The stress which is added can alter the structure of the conductive material. It is then not possible to determine if defects observed in the structure are inherent in the conductive material or if the defects are an artefact of the testing process.

Typically when testing components where a sample which is removed from a part, the sample is physically removed from a conductive material under investigation and brought to a material analysis lab. In the analysis lab, the workpiece undergoes numerous preparation steps including mechanical and chemical etching. This is a laborious and time consuming process, requiring trained and skilled technicians. The preparation steps add stress to the metal. The need to bring the sample to an analysis lab, also means that structural tests cannot be carried out during production. The need to remove a sample may delay the production process while testing is carried out.

Stress or heat input into the metal surface using traditional methods of determining the structure of conductive materials such as metals places the material under stress, for example mechanical and/ or heat stress. It is difficult to analyse metals such as CoCr, Gamma Titanium, and Inconel. Traditional methods of determining the structure of a conductive material involve removing the uppermost surface of the sample to be analysed, for example by slicing or grinding. The metal is then polished and etched and an image may be taken from the metal. This is a laborious and time consuming process. Traditional methods of determining the structure of conductive materials by this process are limited to flat pieces of metal as the uniform polishing required to reveal the structure produces a flat surface.

If determining the three dimensional structure is required it is difficult to perform using traditional methods. Serial sectioning, wherein the steps to obtain an image are repeated as further layers of conductive material are removed, may be performed. The images can be combined in a z-stack to produce a 3-dimensional representation of the structure of the conductive material. The issue encountered is that as the upper surface is removed at each step there is no reference point by which the distance between each image can be easily determined. To overcome this the prior art have used complex measurement techniques to correctly position the images of the microstructure of the metal.

US10260865 discloses a metallographic system including a measurement module configured to provide precise differential measurements of a sample after serial sectioning, as well as methods of employing such a module. In particular example, the measurement module provides differential measurement(s) without contacting the surface of a sample, thereby minimizing contamination of the sample surface.

There is a need for methods to determine the structure of a conductive material which overcome the issues associated with known methods of determining the structure of a conductive material.

### Summary of the Invention

In one aspect, the present invention provides a method of determining the structure of a conductive material comprising:
a. providing a workpiece formed from the conductive material wherein the workpiece has a first surface,
b. removing conductive material from the first surface to form a second surface by means of a charged electrolytic jet which is ejected from a nozzle,
c. imaging the second surface to produce an image of the second surface.

The method of the present invention determines the structure of a conductive material. The structure may be a microstructure or a nanostructure. Beneficially the method does not add stress, for example mechanical or thermal stress to the material whose structure is determined. Beneficially the minimal amount of conductive material can be removed to form a second surface. For example, the conductive material may be removed from a single position of the workpiece which is small compared to the overall size of the workpiece. This allows for nondestructive testing of the workpiece. In prior art testing methods it is not possible to perform testing of a small representative portion of a workpiece. Prior art methods remove a complete layer from the workpiece.

Determining the structure of a conductive material may yield a plethora of information about the conductive material. For example, a general increase in yield strength and hardness with decreasing grain size, anisotropic mechanical properties with elongated grains and/or preferred grain orientations, a general tendency of decreased ductility with increasing inclusion content, a direct influence of inclusion content and distribution on fatigue crack growth rates

(metals) and fracture toughness parameters (ceramics), the association of failure initiation sites with material discontinuities or microstructural features, such as second-phase particles, macrostructural patterns resulting from solidification or working (growth patterns, flow lines, banding, etc.), weld penetration depth and heat-affected zones, physical discontinuities (porosity, cracking) due to solidification or working, chemical and electrochemical surface modifications (decarburization, oxidation, corrosion, contamination), case hardening depth (surface hardening) in steel alloys or patterns due to quenching irregularities, damage caused by improper grinding or machining, thermal effects due to overheating or fatigue. It may be possible to determine the sizes of certain features in the alloy and how many of these types of features are there or how much of a particular constituent is present in an alloy.

The method comprises providing a workpiece formed from the conductive material wherein the workpiece has a first surface. The workpiece is formed from the conductive material to allow for a flow of current. If the workpiece is not conductive no current will flow and it will not be possible to remove the material to form the second surface. The workpiece can be a whole part or a sample from a part.

The method comprises removing conductive material from the first surface to form a second surface by means of a charged electrolytic jet which is ejected from a nozzle. The nozzle is attached to negative output of a power supply. The workpiece attached to positive output of a power supply. The electrolytic jet is formed from electrolyte which contains ions which can freely move. The electrolytic jet closes the circuit between the nozzle which now becomes the cathode and the workpiece which becomes the anode. The flow of current causes anodic dissolution in which the anode is dissolved. In this case anodic dissolution causes the first surface of the workpiece to be removed, for example dissolved, and the second surface is formed. This process is known as jet electrochemical machining (jet ECM). Beneficially using jet ECM to form the second surface means that the workpiece is not subjected to excessive stress, for example thermal or mechanical stress. Removal of material from the workpiece through anodic dissolution does not create excessive stress on the workpiece. If the workpiece was subjected to excessive stress the structure of the workpiece may be affected. For example, mechanical shear stress could cause an alteration to the structure of the workpiece which when imaged would look like a defect in the workpiece. Any excessive stress placed on the workpiece while the structure is being determined could lead to erroneous results wherein it is not possible to determine if the defect is integral or caused by the excessive stress itself. The process of removing conductive material minimises the formation of sharp corners, there may be a smooth transition from the first surface to the second surface. Sharp corners may increase stress at the corner and may act as weak points from which cracks or defects can initiate. Beneficially using an electrolytic jet to form the second surface minimises sharp corners.

The method may comprise removing a section of the first surface so that another section of the first surface remains. It will be appreciated that some of the first surface may remain in sections of the workpiece from which conductive material is not removed. Beneficially the remaining first surface can be used to position the nozzle at a selected distance from the workpiece. As a section of the first surface remains it can be used to calibrate the distance of the nozzle from the workpiece so that the nozzle remains a set distance from the workpiece.

The method comprises imaging the second surface to produce an image of the second surface. Beneficially, the imaging method produces a clear image of the second surface. Beneficially the imaging method allows the structure of the conductive material to be determined. The imaging means for imaging the second surface may be, for example, a light microscope, an electron microscope, a scanning probe microscope, super-resolution microscope, or x-ray microscope.

The method may comprise analysing the image of the second surface. The image of the second surface may be analysed to determine the structure of the conductive material. For example, the size and distribution of grains in the conductive material can provide information on physical properties, such as the strength, of the conductive material. It is also possible to identify defects in the structure of the conductive material. As removing the conductive material does not cause excessive stress to the workpiece any defects identified are inherent in the conductive material and are not artefacts of the removal process.

The method may comprise analysing the image of the second surface using machine learning. For example, the image may be analysed by machine learning to determine the structure of the conductive material and to predict the physical properties of the conductive material. For example, the image may be analysed by machine learning which has been trained to detect defects.

The method of determining the structure of a conductive material may comprise measuring the distance of the second surface from the first surface. The conductive material may be formed in layers. For example, when the conductive material is formed it may be formed with an outer layer and an inner layer(s). Beneficially measuring the distance of the second surface from the first surface would allow the skilled person to know the layer of material whose structure is being determined. Measuring the distance of the second surface from the first surface may be performed by laser measurement, by determining the current which passes through the electrolytic jet, or by continuity measurement. Continuity measurements is where the electrolytic jet is not flowing from the nozzle. The nozzle can be moved to touch the workpiece and the distance which the nozzle is required to move to touch the workpiece can be determined.

The method of determining the structure of a conductive material may comprise determining the surface roughness of the second surface prior to imaging the second surface to produce an image of the second surface. The roughness can be determined according to EN ISO 4287:1997 (Geometrical Product Specifications (GPS) - Surface texture: Profile method - Terms, definitions and surface texture parameters). Beneficially determining the surface roughness of the second surface prior to imaging allows the user to determine if the second surface is suitably smooth to allow imaging. When the second surface is not smooth enough to allow imaging additional conductive material can be removed to form a second surface which is suitable for imaging.

Preferably the second surface has a Rt (total height of the roughness profile) of less than 10 µm, for example less than 5 µm, for example less than 2 µm, for example less than 1 µm, for example less than 0.5 µm, for example less than 0.1 µm, for example less than 0.05 µm, for example less than 0.025 µm as measured according to EN ISO 4287:1997 or preferably the second surface has a Rz (mean roughness depth) of less than 10 µm, for example less than 5 µm, for example less than 2 µm, for example less than 1 µm, for example less than 0.5 µm, for example less than 0.1 µm, for example less than 0.05 µm, for example less than 0.025 µm as measured according to EN ISO 4287:1997 or preferably the second surface has a Ra (arithmetical mean roughness value) of less than 2 µm, for example less than 1 µm, for example less than 0.5 µm, for example less than 0.1 µm, for example less than 0.5 µm, for example less than 0.02 µm, for example less than 0.01 µm, for example less than 0.006 µm as measured according to EN ISO 4287:1997, or a combination thereof. Beneficially the second surface is smooth enough to allow an image of the structure of the conductive material to be produced.

The conductive material may comprise a conductive metal. The conductive material may be made from a homogenous material, for example a conductive metal. The conductive material may also be a composite material wherein layers of conductive material are separated by layers of non-conductive material. Beneficially the method is suitable for determining the structure of a conductive material comprising a conductive metal because conductive metals are well suited to ionic dissolution.

The conductive material may be an alloy, for example an alloy comprising one or more of cobalt, chromium, nickel, titanium, aluminium such as a cobalt-chromium alloy, titanium aluminide, or nickel-chromium based alloy for example an austenitic steel. These alloys are often very difficult to machine using traditional methods such as milling and grinding. It may be difficult to determine the structure of alloys as it is difficult to remove conductive material to form a second surface without causing excessive stress to these materials. Beneficially the present method allows removal of conductive material from these difficult to work with materials in a manner which does not cause excessive stress.

The charged electrolytic jet may have an electrical current density of at least 1 amp per cm² when ejected from the nozzle. This is the current at the exit point of the nozzle divided by the cross section area at the exit point of the nozzle. The exit point of the nozzle is the point of the nozzle where the electrolytic jet is ejected from. The exit point is the aperture in the nozzle from which the electrolytic jet is ejected. The current at the exit point of the nozzle can be determined, for example from the machine settings. The cross sectional area of the exit point nozzle can be determined depending on the shape of the exit point of the nozzle, for example for a rectangular exit point the cross sectional area is determined by multiplying the width by the length of the exit point or for a circular exit point the cross sectional area is determined by the equation πr². When the electrical current density is less than 1 amp per cm² no ionic dissolution will occur and the second surface will not be properly formed. It is not possible to increase the time for which the electrical current density is applied to compensate for an electrical current density below 1 amp, increasing the time without increasing the electrical current density does not provide a surface which is smooth enough to image. Higher electrical current density may lead to a rougher second surface. For example, and electrical current density of more than 100 amps per cm² may lead to arcing of the current which is not desirable as it may lead to damage to the workpiece. In addition, a very high electrical current density, for example above 100 amps per cm² may not be preferable as it may require very high electricity generation to cause an electrical current density above this.

The method may comprise controlling the electrolytic jet temperature. Beneficially controlling the temperature of the electrolytic jet allows the speed of removal of the conductive material by the electrolytic jet to be controlled. The removal of conductive material by ionic dissolution is a chemical process. Chemical processes usually proceed faster at increased temperatures. Increasing the temperature of the electrolytic jet may increase the speed of removal of the conductive material. Increasing the temperature may allow the electrolytic jet to become more conductive. Decreasing the temperature of the electrolytic jet may decrease the speed of removal of the conductive material.

The method may comprise controlling the cross sectional area of the electrolytic jet to control the temperature of the electrolytic jet. The electrolytic jet conducts electricity from the nozzle to the workpiece. As a conductor the electrolytic jet will be heated by Joule heating in which the passage of an electrical current through a conductor produces heat. If the size of the conductor is reduced, by reducing the cross sectional area of the electrolytic jet, while the current remains constant then more heat will be produced by Joule heating. If the size of the conductor is increased, by increasing the cross sectional area of the electrolytic jet, while the current remains constant then less heat will be produced by Joule heating. Beneficially this allows the skilled person to control the speed at which the conductive material is removed for form the second surface.

The method may comprise controlling the temperature of the workpiece. Beneficially cooling the workpiece may reduce the time required to remove conductive material to form the second surface as a conductive material with a lower temperature may be more conductive.

The method may comprise removing residual electrolyte from the second surface before imaging the second surface. Residual electrolyte can remain on the second surface after the conductive material has been removed to form the second surface. Beneficially removing residual electrolyte may allow for the images of the second surface to be more distinct.

The method according to any preceding claim comprising treating the second surface, for example wiping or etching the second surface, before imaging the second surface. Beneficially treating the second surface before imaging the second surface may allow better quality images to be obtained, for example etching the second surface prior to imaging the second surface may make allow the image of the second surface to be more distinct, for example to have increased contrast. Etching may, for example, remove any oxides which form on the second surface.

The method may comprise passing a constant current through the electrolytic jet. This can be achieved by varying the voltage between the nozzle and the workpiece. For example, as the conductive material is removed the distance from the nozzle to the workpiece increases. This will increase the resistance and lead to a decrease in current. The current which is passed can be kept constant as the resistance increases by varying the voltage between the nozzle and the workpiece.

The method may comprise selecting the constant current passing through the electrolytic jet to control the temperature of the electrolytic jet. The electrolytic jet can be heated by Joule heating. The amount of Joule heating which the electrolytic jet experiences can be controlled by selecting the constant current passing through the electrolytic jet. Beneficially this allows the skilled person to control the speed at which the conductive material is removed for form the second surface.

The method may comprise determining the distance from the second surface to the first surface by measuring the voltage between the nozzle and the second surface of the workpiece when passing a constant current through the electrolytic jet. The electrolytic jet increases in length as conductive material is removed. To maintain a constant current the voltage as the electrolytic jet increases in length the voltage may be increased. The increase in voltage from when the first surface is the cathode to when the second surface is the cathode can be measured. The increased voltage can be used to determine the distance from the first surface to the second surface. For example, by using lookup tables which correlate voltage and distance.

The method may comprise applying a constant voltage between the nozzle and the second surface of the workpiece. The nozzle acts as the cathode and the workpiece acts as the anode. By maintaining a constant voltage the amount of current which passes through the electrolytic jet can be varied. As the amount of current which passes through the electrolytic jet controls the anodic dissolution is it possible to control the amount of material removed by applying a constant voltage. The current will decrease as the length of the electrolytic jet increases. If the current decreases below a threshold level anodic dissolution will stop. By applying a constant voltage it is possible to determine the amount of material which is removed as an increase in the length of the electrolytic jet will lead to a reduction in current below the threshold level for anodic dissolution to occur.

The method may comprise maintaining the nozzle in the same position relative to the workpiece while removing conductive material. Beneficially this allows the removal of conductive material at a single point. Beneficially this allow the removal of conductive material from a small area of the workpiece, for example from an area of the workpiece which is 1 µm² or smaller.

The method may comprise relative movement between the nozzle and the workpiece while removing conductive material. Beneficially this allows a larger second surface to be formed without requiring a larger nozzle. The structure of the conductive material of the workpiece may differ depending on where on the workpiece is analysed. For example, when the workpiece is formed cooling rates may be faster at the edge of workpiece which can lead to different structure in different sections of the workpiece or there may be areas of high stress and areas of low stress in the workpiece. Relative movement between the nozzle and the workpiece while removing conductive material allows any change in structure in the workpiece to be determined. The relative movement may occur due to movement of the nozzle or the workpiece or both. During the relative movement the electrical current density on the first surface of the workpiece may be maintained at a constant density or may be varied.

The method may comprise relative movement between the nozzle and the workpiece in a planar direction while removing conductive material. The relative movement in a planar direction may occur due to movement of the nozzle in a planar direction or the workpiece in a planar direction or both. During the relative movement in the planar direction the electrical current density on the first surface of the workpiece may be maintained at a constant density or may be varied.

The method may comprise relative movement between the nozzle and the workpiece while removing conductive material wherein the relative movement comprises rotational motion of the nozzle or the workpiece or both. During the relative movement the nozzle may be maintained at a constant distance from the first surface of the workpiece. Beneficially relative movement between the nozzle and the workpiece while removing conductive material wherein the relative movement comprises rotational motion of the nozzle or the workpiece or both allows the removal of conductive material from non-flat surfaces. That may allow the method to be used with a wide range of workpieces, for example where the workpiece has a corner it is possible to determine the structure of the conductive material in inside or the outside of the elbow of the corner.

The method may comprise repeating the steps of removing conductive material a plurality of times thereby forming a plurality of second surfaces, and imaging each of the second surfaces to obtain a plurality of images of the plurality of second surfaces. Beneficially this allows the plurality of images to be combined to determine the three dimensional structure of the conductive material. The nozzle may maintain the same distance from the first surface throughout the formation of the plurality of second surfaces. As a section of the first surface remains it is possible to determine the exact distance of each of plurality of second surfaces from the first surface. This makes it possible to position the images correctly in the depth direction to determine the three dimensional structure. The images can be stacked to determine the three dimensional structure of the conductive material.

The method may comprise using the images as training data to create a machine learning model to determine the structure of the conductive material. Beneficially a machine learning model may identify patterns in the images which allow the structure of the conductive material to be determined. By using the images as training data to create a machine learning model this may ensure that the machine learning model is trained on the correct data to identify the required structures in the conductive material.

The method may comprise using data obtained from the charged electrolytic jet as training data to create a machine learning model to determine the structure of the conductive material. The data which may be obtained from the charged electrolytic jet may be, for example, the electrical current density, the resistance, the current, the voltage, or the temperature of the electrolyte.

In another aspect the invention relates to a method of identifying a part by determining the structure of a conductive material comprising:
a. providing the part formed from the conductive material wherein the part has a first surface,
b. removing conductive material from the first surface to form a second surface by means of a charged electrolytic jet which is ejected from a nozzle,
c. imaging the second surface to produce an image of the second surface,
d. identifying the part from the image of the second surface.

The method of the invention identifies parts by determining the structure of the conductive material. The structure of the conductive material which forms a component part is unique. It can be used to identify a part, for example, in track and trace systems for manufacturing chains or medical devices. The structure acts as a unique identifier, fingerprint, which can identify parts.

A part is a workpiece. The two terms are used interchangeably throughout this disclosure.

The image of the second surface may be used to identify the part. For example, an image may be taken and stored, possibly electronically. At second image can then be taken and compared to the first image to determine the identity of the part. If the images match it confirms that the originally imaged part is the same part as is subsequently imaged.

In another aspect the invention relates to a computer-implemented method of training a machine learning method for determining the structure of a conductive material comprising:
a. generating a database of images produced according to the method of the invention;
b. collecting a set of images from the database;
c. creating a training set comprising the collected set of images,
d. training the machine learning method to determine the structure of a conductive material using the training set.

Beneficially the computer-implemented method of training a machine learning method for determining the structure of a conductive material allows the trained machine learning method to determine the structure of the conductive material and to determine, for example, a general increase in yield strength and hardness with decreasing grain size, anisotropic mechanical properties with elongated grains and/or preferred grain orientations, a general tendency of decreased ductility with increasing inclusion content, a direct influence of inclusion content and distribution on fatigue crack growth rates (metals) and fracture toughness parameters (ceramics), the association of failure initiation sites with material discontinuities or microstructural features, such as second-phase particles, macrostructural patterns resulting from solidification or working (growth patterns, flow lines, banding, etc.), weld penetration depth and heat-affected zones, physical discontinuities (porosity, cracking) due to solidification or working, chemical and electrochemical surface modifications (decarburization, oxidation, corrosion, contamination), case hardening depth (surface hardening) in steel alloys or patterns due to quenching irregularities, damage caused by improper grinding or machining, thermal effects due to overheating or fatigue.

The computer-implemented method of training a machine learning method for determining the structure of a conductive material may comprise combining the data from the process parameters used for removing the first surface. This allows for example the machine learning to determine if the process parameters have affected the production of the second surface.

In another aspect the invention relates to a computer-implemented method of training a machine learning method for determining the structure of a conductive material comprising:
a. generating a database of data generated from the images produced according to the method of any of clauses 1 to 26 and the data obtained from the charged electrolytic jet of clause 27;
b. collecting a set of data from the database;
c. creating a training set comprising the collected set of data,
d. training the machine learning method to determine the removal conditions required to obtain a second surface suitable for imaging using the training set.
Beneficially this allows the machine learning to determine the optimal conditions required to produce a second surface which is suitable for imaging.

In another aspect the invention relates to a system for determining the structure of a conductive material comprising:
a. jet electrochemical machining means for removing material from a first surface of a workpiece to form a second surface by means of a charged electrolytic jet which is ejected from a nozzle; and
b. imaging means for imaging the second surface.

The jet electrochemical machining means and the imaging means may be housed in a single apparatus. Beneficially this may allow the system to be mobile, for example the system may be brought to a workpiece. This may be beneficial for onsite testing, for example of large workpieces which are difficult to transport.

The jet electrochemical machining means and the imaging means may be housed separately. Beneficially this may allow for high throughput of workpieces, for example, on a production line.

The system may comprise distance measuring means for measuring the distance of the second surface from the first surface. The distance measuring means may be, for example, a laser or ultrasonic distance measuring means.

The system may comprise roughness measuring means for measuring the roughness of the second surface prior to imaging the second surface to produce an image of the second surface. The roughness measuring means may be, for example, a laser or mechanical means such as a stylus.

The system may comprise electrolytic jet temperature control means. The electrolytic jet temperature control means may be a temperature controlled reservoir in which the electrolyte is stored.

The system may comprise residual electrolyte removal means for removing residual electrolyte from the second surface before imaging the second surface. The residual electrolyte removal means may be, for example, using air or water.

The system may comprise treating means for treating the second surface before imaging the second surface. The treatment means may comprise harsh treatments, for example, etching, or more gentle treatments, for example wiping.

The system may comprise movement means for moving the nozzle and/ or the workpiece while removing conductive material, for example planar movement means or rotational movement means or a combination thereof. The movement means may be, for example, a gantry upon which the jet electrochemical machining means or the workpiece is housed.

The components of the system may be housed in a single apparatus or may be housed separately, or a combination thereof.

### Brief Description of the Drawings

Embodiments of the invention will be described, by way of example only, with reference to the accompanying drawings in which:
**Figure 1** is a schematic of method of the invention;
**Figure 2** shows the removal of conductive material from a workpiece;
**Figure 3** shows a second surface formed on the workpiece;
**Figure 4** shows imaging of a second surface of a workpiece;
**Figure 5** shows relative movement between a nozzle and a workpiece;
**Figure 6** shows some nozzle shapes which may be suitable for ejecting an electrolytic jet;
**Figure 7** shows angles which the nozzle may be positioned at with respect to the first surface of the workpiece;
**Figure 8** shows conformal motion of the nozzle and workpiece relative to one another;
**Figure 9** show a workpiece with an additional second surface;
**Figure 10** shows removal of conductive material from a complex joint;
**Figure 11** shows removal of conductive material from a curved first surface;
**Figure 12** shows options for removal of conductive material from a first surface;
**Figures 13****,** **15, and 16** show the structure of a conductive material and the image is taken after removing conductive material by jet-ECM;
**Figure 14** shows an image of the structure of a conductive material wherein the conductive material is not removed by jet-ECM.

### Detailed Description of the Drawings

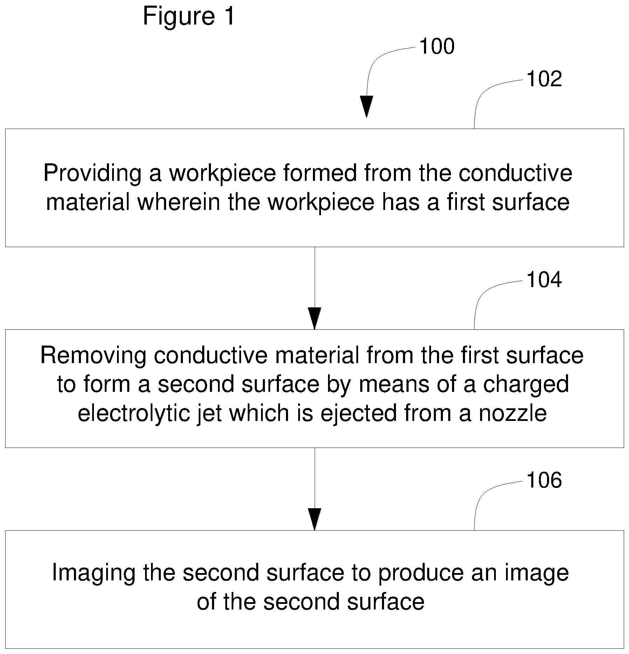

**Figure 1** shows a schematic of a method 100 of determining the structure of a conductive material comprising:
a. providing 102 a workpiece 200 formed from the conductive material wherein the workpiece has a first surface 202,
b. removing 104 conductive material from the first surface 202 to form a second surface 300 by means of a charged electrolytic jet 204 which is ejected from a nozzle 206,
c. imaging 106 the second surface 300 to produce an image of the second surface 300.

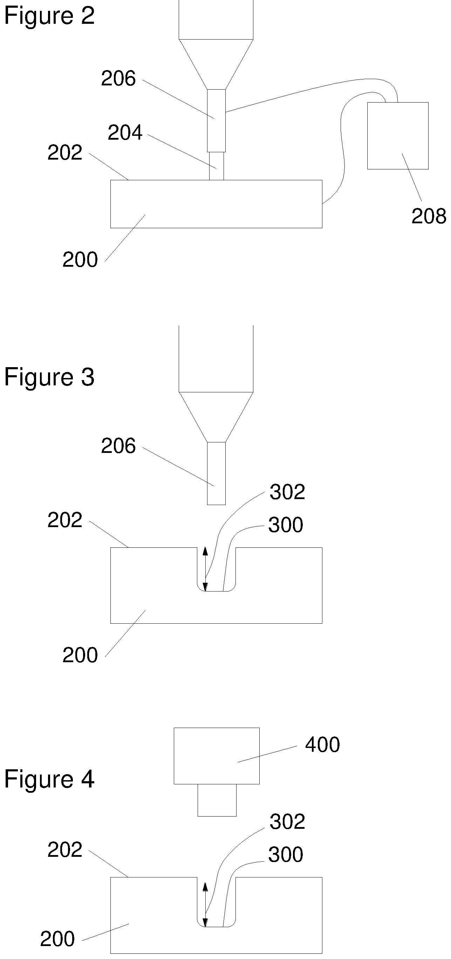

**Figure 2** shows a workpiece 200 which is formed from a conductive material. The conductive material may comprise a conductive metal or may be essentially formed from metal. The conductive material may be an alloy, for example an alloy comprising one or more of cobalt, chromium, nickel, titanium, aluminium such as a cobalt-chromium alloy, titanium aluminide, or nickel-chromium based alloy for example an austenitic steel.

The workpiece 200 is shown attached to the positive output of a power supply 208. The nozzle 206 is shown attached to the negative output of the power supply 208. The electrolytic jet 204 is ejected from a nozzle 206 and completes the electrical circuit between the workpiece 200 and the nozzle 206. The workpiece 200 is now the anode and the nozzle 206 is the cathode. The flow of current causes anodic dissolution of the first surface 202 of the workpiece 200 where the electrolytic jet 204 contacts the first surface 202. This process may be known as jet electrochemical machining or jet ECM. Due to anodic dissolution conductive material is removed 104 from the first surface of the workpiece 200. An electrical current density of at least 1 amp per cm² when the electrolytic jet 204 is ejected from the nozzle 206 is required to cause anodic dissolution of the conductive material. The electrical current density may be maintained at a constant density during removal 104 of the conductive material from the first surface 202 to form the second surface 300. The electrical current density may be varied during removal 104 of the conductive material from the first surface 202 to form the second surface 300. The electrical current density is the current at the exit point of the nozzle 608 divided by the cross sectional area of the exit point of the nozzle 608.

**Figure 3** shows the second surface 300 which is formed by means of the charged electrolytic jet 204 which is ejected from a nozzle 206. Beneficially the first surface 202 may remain intact as a section of the first surface 202 is removed 104 and another section of the first surface 202 remains. This allows the distance 302 from the first surface 202 to the second surface 300 to be measured. This is beneficial in comparison to methods which fully remove the entire first surface 202 and do not allow for accurate measurement of the distance between the first 202 and second 300 surfaces. The skilled person will appreciate that, if desired, the entire first surface 202 can also be removed.

Once the second surface 300 is formed imaging 106 the second surface 300 to produce an image of the second surface 300 can be performed as shown in **Figure 4****.** Imaging may be done by any imaging means 400. The imaging means 400 can be, for example, a light microscope, an electron microscope, a scanning probe microscope, super-resolution microscope, or x-ray microscope. It may be necessary to use additional lighting sources to improve the quality of the image produced. The image of the second surface 300 may be analysed to determine the structure of the conductive material, for example by analysing the size and distribution of grains in the conductive material which can provide information on the physical properties, such as the strength, of the conductive material. It is also possible to identify defects in the structure of the conductive material. The image may be analysed by hand, for example by a skilled operator. The image may be analysed by using image analysis software. The image may be analysed using machine learning methods. The images may be used as training data to create a machine learning model to determine the structure of the conductive material. The data obtained from the charged electrolytic jet may also be used as training data to create a machine learning model to determine the structure of the conductive material in combination with the images, or independently of the images. The produced images may be used to generate a database of images, a set of images can be collected from the database, a training set can be created from the collected set of images, and a machine learning method can be trained using the training set to determine the structure of the conductive material.

Removing 104 conductive material from the first surface 202 to form a second surface 300 by means of a charged electrolytic jet 204 which is ejected from a nozzle 206 means that the first surface 202 will be closer to the nozzle 206 than the second surface 300. Beneficially the distance from the first surface 202 to the second surface 300 may be measured. This allows, for example, for 3-dimensional models of the structure of the conductive material to be generated by z-stacking or the like. The first surface 202 remains in situ and can act as an accurate reference point for the measurement.

Imaging the second surface 300 requires that the second surface 300 is suitably smooth to allow a high quality image to be produced 106. Rt (total height of the roughness profile), Ra (arithmetical mean roughness value), and Rz (mean roughness depth) are parameters used to define/ measure the surface roughness and can be measured according to EN ISO 4287:1997. One or more of Rt, Ra, or Rz may be measured to determine the roughness of the second surface 300. The second surface 300 may have a Rt of less than 10 µm as determined according to EN ISO 4287:1997, or a Rz of less than 10 µm as determined according to EN ISO 4287:1997 or a Ra of less than 2 µm as determined according to EN ISO 4287:1997. Beneficially the structure of the conductive material, for example grains of a metal, may only be revealed when the second surface 300 has reached a certain roughness limit. The lower the roughness as measured by Rt, Rz, or Ra the smoother the second surface 300. Removing 104 conductive material by means of a charged electrolytic jet 204 (jet-ECM process) progressively improves the surface roughness as it is possible to go over and back on a surface tens to hundreds of times to produce a second surface 300 with the desired roughness. The surface roughness of the second surface 300 may be determined prior to imaging 106 the second surface 300 to confirm that the desired roughness has been achieved.

The temperature of the electrolytic 204 jet may be controlled during removal 104 of conductive material from the first surface 202 to form the second surface 300. The electrolyte which forms the electrolytic jet may be stored in a reservoir before it is ejected from the nozzle 206. The temperature of the electrolyte in the reservoir may be varied as required. The temperature of the electrolyte may be controlled by varying the current which passes through the electrolytic jet 204. The temperature of the electrolyte may be controlled by controlling the cross sectional area of the electrolytic jet 204. Alternatively, or in addition, the temperature of the workpiece can be controlled. The removal 104 process is a chemical process of anodic dissolution and in general reducing the temperature of the workpiece will allow it to be more conductive which may reduce the time required to remove conductive material to form the second surface 300.

After removing 104 conductive material from the first surface 202 to form a second surface 300 by means of a charged electrolytic jet 204 which is ejected from a nozzle 206 it is possible that some residual electrolyte remains on the second surface 202. This may interfere with imaging 106 the second surface. It may be desirable to remove residual electrolyte from the second surface 202 before imaging 106 the second surface 202. It may be desirable to treat the second surface 202, for example wiping or etching the second surface 202, before imaging 106 the second surface 202. Treatments may be gentle treatments, such as wiping, washing, or drying, for example with compressed air. Treatments may be harsher treatments, such as etching, however in most cases harsher treatments will not be required as removing 104 conductive material from the first surface 202 to form a second surface 300 by means of a charged electrolytic jet 204 which is ejected from a nozzle 206 leaves the second surface 202 suitable for imaging 106.

A constant current may be passed through the electrolytic jet 204. The constant current passing through the electrolytic jet 204 may be selected so as to control the temperature of the electrolytic jet.

When a constant current is passed through the electrolytic jet 204 the distance 302 from the second surface 300 to the first surface 202 may be determined by measuring the voltage between the nozzle 206 and the second surface 300 of the workpiece 200. As the current is constant the voltage will change as the length of the electrolytic jet 204 extends further as conductive material is removed. The distance 302 can be determined by measuring the change in voltage and, for example, using look up tables which correlate the change in voltage with distance 302.

A constant voltage may be passed between the nozzle 206 and the second surface 202 of the workpiece 200. By passing a constant voltage between the nozzle 206 and the second surface 202 the distance 302 may be controlled. As the length of the electrolytic jet 204 increases the electrical resistance it causes will also increase. Using a constant voltage means that the current will drop as the resistance increases and the current may drop below the electrical current density required for anodic dissolution. The nozzle 206 may be positioned at a distance 302 of least about 0.01 mm from the first surface 202. The nozzle 206 may be positioned at a distance 302 up to 10 mm from the first surface 202. The distance 302 of the nozzle 206 from the first surface 202 should mean that sufficient electrical current density will be achieved to cause ionic dissolution of the conductive material.

The method according to any preceding claim comprising maintaining the electrolytic jet in the same position relative to the workpiece while removing conductive material.

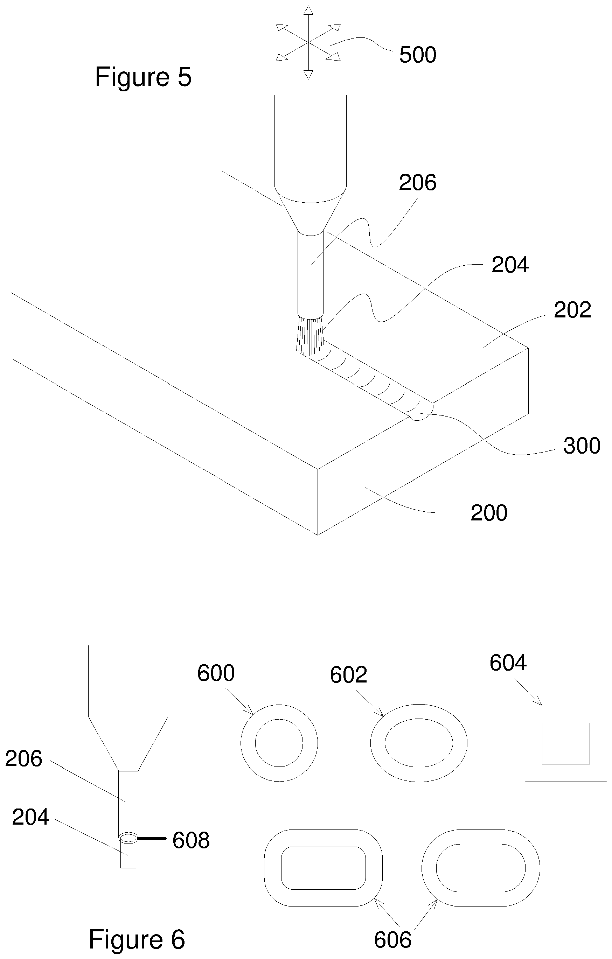

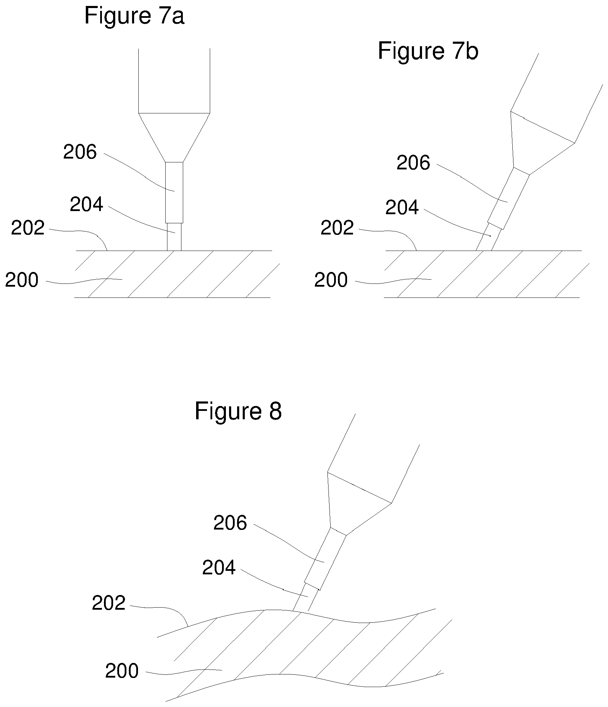

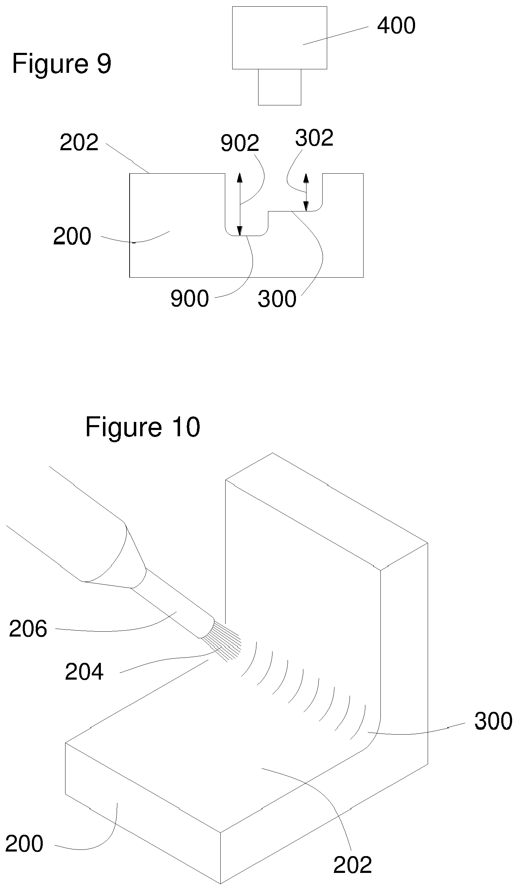

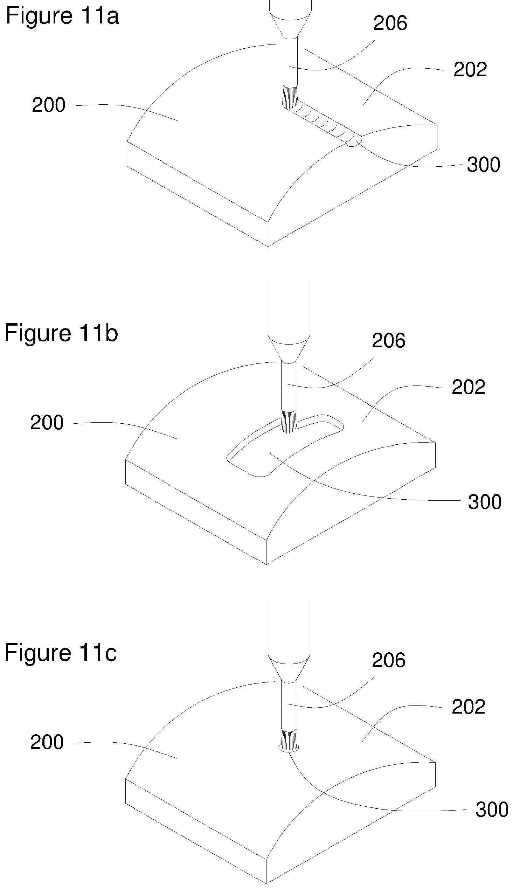

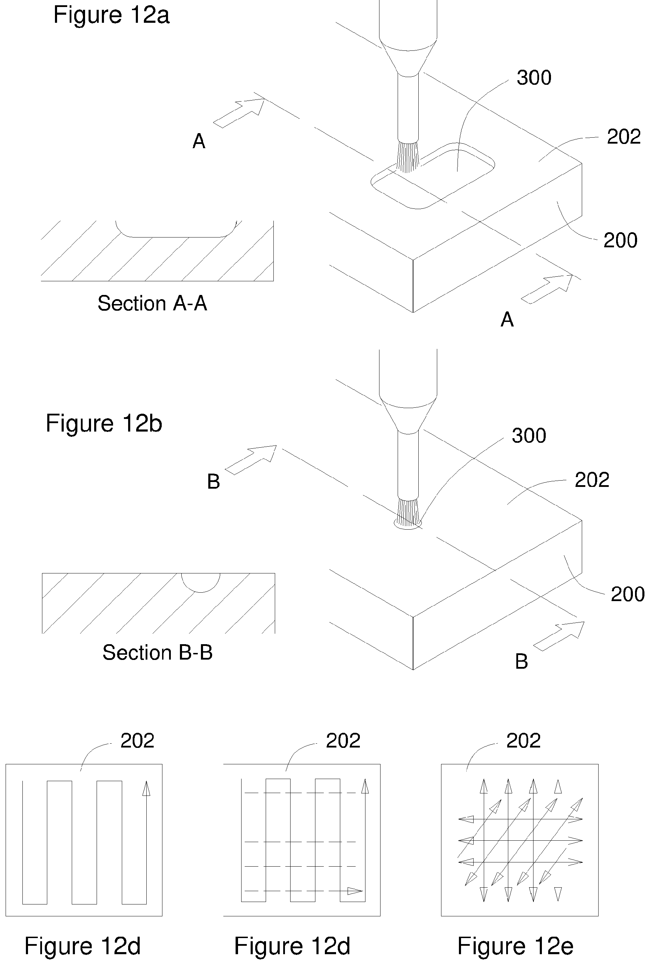

**Figure 5** shows relative movement between the nozzle 206 and the workpiece 200while removing conductive material. Where no relative movement occurs the second surface 300 is formed as a pit or spot as shown in **Figure 12b** wherein the shape of the second surface can be seen along the line B. The relative movement may be obtained by moving the workpiece 200 or the nozzle 206 or a combination of both. The relative movement between the nozzle 206 and the workpiece 200 may be in a planar direction 500 and may form a patch of second surface 300 as shown in **Figure 12a****.** A patch may be formed by machining in a single direction as shown in **Figure 12c,** in two directions as shown in **Figure 12d****,** or in multi-directions as shown in **Figure 12e.** The relative movement may comprise rotational motion of the nozzle 206 or the workpiece 200 or both as shown in **Figure 8****.** This allows for the removal of conductive material from workpieces 200 which are not planar. The relative movement may be both planar and rotational to allow the nozzle 206 to conform to the shape of the workpiece 200 and/ or the contours of the first surface 202. For example, the relative movement may allow for the second surface 300 to be a conformal track as shown in **Figure 11a****,** or a conformal patch as shown in **Figure 11b****,** or a conformal pit as shown in **Figure 11c****.** The distance of the nozzle 206 from the first surface 202 of the workpiece 200 can be kept constant taking into account any undulations in the workpiece 200. Due to the relative movement between the nozzle 206 and the workpiece 200, which may occur in planar 500 or rotational movement, it is possible to determine the structure of conductive material in sections of a workpiece 200 in which it may be difficult to determine. For example, **Figure 10** illustrated that it is possible to determine the structure of a workpiece 200 at a complex joint, for example, at the elbow of a corner. This is useful as complex joints, such as corners, may be areas where stress builds up in a workpiece 200 and it may be advantageous to determine the structure there.

The nozzle 206 may be positioned at a right angle to the first surface 202 of the workpiece 200 as shown in **Figure 7a****.** The nozzle 206 may be positioned at an angle, as shown in **Figure 7b****,** to the first surface 202 of the workpiece 200. The angle must allow for the electrolytic jet 204 to complete the electrical circuit between the nozzle 206 and the workpiece 200.

**Figure 6** illustrates some shapes which the cross section of the charged electrolytic jet 204 may have. The charged electrolytic jet 204 may have a square cross section 604. The charged electrolytic jet may have a round cross section 600, an oval cross section 602, or a rounded rectangular cross section 606. The shape of the charged electrolytic jet 204 may be determined by the shape of the exit point 608 of the nozzle 206 from which the charged electrolytic jet 204 is ejected. The cross sectional shape of the electrolytic jet 204 can be chosen so as to remove conductive material in a certain pattern if required. The cross sectional area of the charged electrolytic jet 204 maybe be at least 0.001 mm². The cross section area of the charged electrolytic jet 204 may be less than 1000 mm². The cross section area of the charged electrolytic jet 204 determines, in part, the electrical current density to cause removal of the conductive material by means of anodic dissolution.

The steps of removing conductive material may be repeated a plurality of times thereby forming a plurality of second surfaces 300, 900, as shown in **Figure 9****.** The initial second surface 300 will be formed at a depth 302 from the first surface 202. The additional second surface 900 will be formed at a depth 902 from the first surface 202. A portion of the initial second surface 300 may remain. The initial second surface 300 may be imaged and then the additional second surfaces 900 may also be imaged. In this manner a plurality of images of the plurality of second surfaces 300, 900 can be obtained. Advantageously the first surface 202 may remain intact while the second surfaces 300, 900 are formed allowing the first surface 202 to act as a static reference point to determine the distances 302, 902 accurately. This may allow the plurality of images to be combined to determine the three dimensional structure of the conductive material as accurate determination of the distance allows the images to be correctly spatially positioned with respect to one another.

In another embodiment a method of identifying a part 200 by determining the structure of a conductive material is disclosed. The method of identifying a part 200 comprises:
a. providing the part 200 formed from the conductive material wherein the part has a first surface 202,
b. removing conductive material from the first surface 202 to form a second surface 300 by means of a charged electrolytic jet 204 which is ejected from a nozzle 206,
c. imaging the second surface 202 to produce an image of the second surface 202,
d. identifying the part from the image of the second surface 202.

For example, an image of the second surface 300 of a part 200 may have been previously produced. These two images can be compared to determine if the structure of the second surfaces 202 is identical. When the images are identical this is confirmation that the part 200 which was previously imaged is the same part 200 as is currently being imaged. The skilled person will appreciate that locating the second surface 202 on a part 200 may be difficult and that it may be beneficial to record the location of the second surface 202 on the part 200.

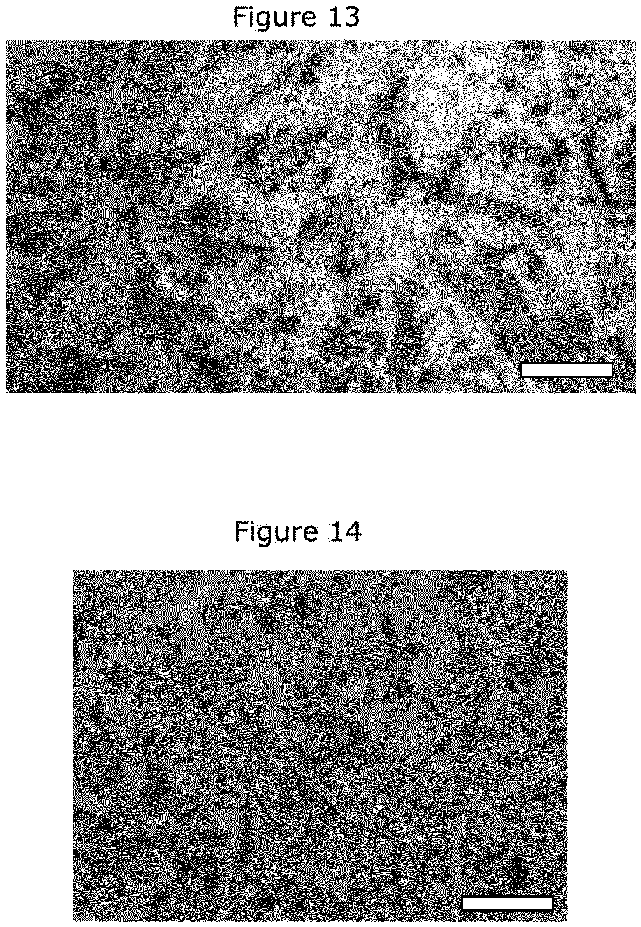

**Figure 13** shows a second surface 300 which was formed by removing 104 conductive material from the first surface 202 to form a second surface 300 by means of a charged electrolytic jet 204 which was ejected from a nozzle 206. The workpiece was a titanium workpiece. The voltage was set at 300V with a gap between the nozzle and workpiece of 0.5mm, 125 passes at 180mm/min nozzle traverse speed using a nozzle diameter of approx. 0.6mm. The average current density was 42 A/cm² and the machining time was 210 seconds. The grain of the conductive material is clearly visible.

**Figure 14** shows a surface for which a conventional grain reveal technique was used. The workpiece was a titanium workpiece. The second surface shown in **Figure 14** was produced by a traditional polish and etch. The polishing took approximately 30 minutes and the etching was done using a hydrofluoric acid and nitric acid etchant for two 5 second increments.

The method of producing the image of the second surface of **Figure 14** took approximately 10 times longer to obtain than that of **Figure 13****.** The method of **Figure 14** involves the use of harsh chemicals which were not required to produce the image shown in **Figure 13****.**

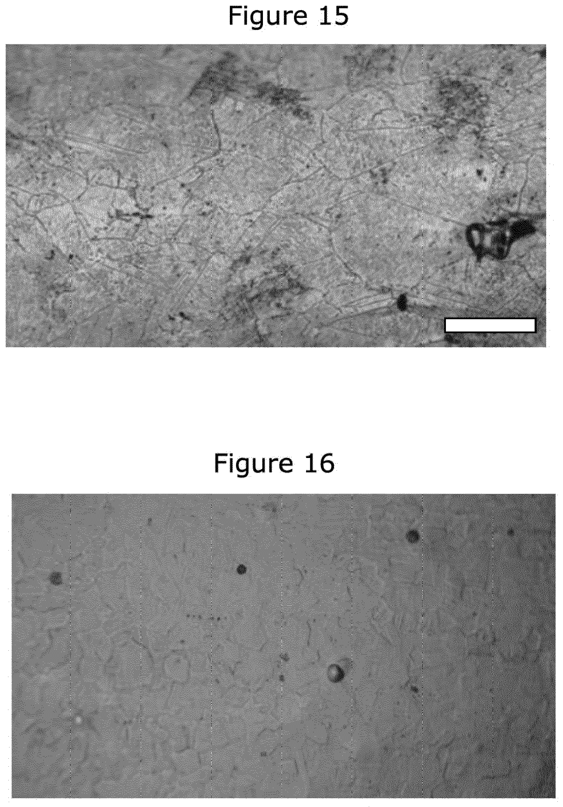

**Figure 15** shows a second surface 300 in which the structure of Inconel is imaged. **Figure 16** shows a second surface 300 in which the structure of 304 stainless steel is imaged.

The scale bars on **Figure 13-16** are 500 µm.

The words "comprises/comprising" and the words "having/including" when used herein with reference to the present invention are used to specify the presence of stated features, integers, steps or components but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable subcombination.

### CLAUSES

1. A method of determining the structure of a conductive material comprising:
   a. providing a workpiece formed from the conductive material wherein the workpiece has a first surface,
   b. removing conductive material from the first surface to form a second surface by means of a charged electrolytic jet which is ejected from a nozzle,
   c. imaging the second surface to produce an image of the second surface.
2. The method according to any preceding clause comprising removing a section of the first surface so that another section of the first surface remains.
3. The method according to any preceding clause comprising analysing the image of the second surface.
4. The method according to any preceding clause comprising analysing the image of the second surface using machine learning.
5. The method according to any preceding clause comprising measuring the distance of the second surface from the first surface.
6. The method according to any preceding clause comprising determining the surface roughness of the second surface prior to imaging the second surface to produce an image of the second surface.
7. The method according to any preceding clause wherein the second surface has a Rt of less than 10 µm as determined according to EN ISO 4287:1997, or a Rz of less than 10 µm as determined according to EN ISO 4287:1997 or a Ra of less than 2 µm as determined according to EN ISO 4287:1997, or a combination thereof.
8. The method according to any preceding clause wherein the conductive material comprises a conductive metal.
9. The method according to any preceding clause wherein the conductive material is an alloy, for example an alloy comprising one or more of cobalt, chromium, nickel, titanium, aluminium such as a cobalt-chromium alloy, titanium aluminide, or nickel-chromium based alloy for example an austenitic steel.
10. The method according to any preceding clause wherein the charged electrolytic jet has an electrical current density of at least 1 amp per cm² when ejected from the nozzle.
11. The method according to any preceding clause comprising controlling the electrolytic jet temperature.
12. The method according to according to any preceding clause comprising controlling the temperature of the electrolytic jet by controlling the cross sectional area of the electrolytic jet.
13. The method according to any preceding clause comprising controlling the temperature of the workpiece.
14. The method according to any preceding clause comprising removing residual electrolyte from the second surface before imaging the second surface.
15. The method according to any preceding clause comprising treating the second surface, for example wiping or etching the second surface, before imaging the second surface.
16. The method according to any preceding clause comprising passing a constant current through the electrolytic jet.
17. The method according to clause 17 comprising selecting the constant current passing through the electrolytic jet to control the temperature of the electrolytic jet.
18. The method according to clause 17 or 18 comprising determining the distance from the second surface to the first surface by measuring the voltage between the nozzle and the second surface of the workpiece.
19. The method according to any of clauses 1 to 9 comprising passing a constant voltage between the nozzle and the second surface of the workpiece.
20. The method according to any preceding clause comprising maintaining the nozzle in the same position relative to the workpiece while removing conductive material.
21. The method according to any preceding clause comprising relative movement between the nozzle and the workpiece while removing conductive material.
22. The method according to any preceding clause comprising relative movement between the nozzle and the workpiece in a planar direction while removing conductive material.
23. The method according to any preceding clause comprising relative movement between the charged electrolytic jet and the workpiece while removing conductive material wherein the relative movement comprises rotational motion of the nozzle or the workpiece or both.
24. The method according to any preceding clause comprising repeating the steps of removing conductive material a plurality of times thereby forming a plurality of second surfaces, and imaging each of the second surfaces to obtain a plurality of images of the plurality of second surfaces.
25. The method according to any preceding clause comprising using the images as training data to create a machine learning model to determine the structure of the conductive material.
26. The method according to any preceding clause comprising using data obtained from the charged electrolytic jet as training data to create a machine learning model to determine the structure of the conductive material.
27. A method of identifying a part by determining the structure of a conductive material comprising:
   a. providing the part formed from the conductive material wherein the part has a first surface,
   b. removing conductive material from the first surface to form a second surface by means of a charged electrolytic jet which is ejected from a nozzle,
   c. imaging the second surface to produce an image of the second surface,
   d. identifying the part from the image of the second surface.
28. A computer-implemented method of training a machine learning method for determining the structure of a conductive material comprising:
   a. generating a database of images produced according to the method of any of clauses 1 to 27;
   b. collecting a set of images from the database;
   c. creating a training set comprising the collected set of images,
   d. training the machine learning method to determine the structure of a conductive material using the training set.
29. The computer-implemented method of training a machine learning method for determining the structure of a conductive material according to clause 29 comprising combining the data of clause 27 with the database of images.
30. A computer-implemented method of training a machine learning method for determining the structure of a conductive material comprising:
   a. generating a database of data generated from the images produced according to the method of any of clauses 1 to 26 and the data obtained from the charged electrolytic jet of clause 27;
   b. collecting a set of data from the database;
   c. creating a training set comprising the collected set of data,
   d. training the machine learning method to determine the removal conditions required to obtain a second surface suitable for imaging using the training set.
31. A system for determining the structure of a conductive material comprising:
   a. jet electrochemical machining means for removing material from a first surface of a workpiece to form a second surface by means of a charged electrolytic jet which is ejected from a nozzle; and
   b. imaging means for imaging the second surface.
32. A system according to clause 32 comprising distance measuring means for measuring the distance of the second surface from the first surface.
33. A system of any of clauses 32 or 33 comprising roughness measuring means for measuring the roughness of the second surface prior to imaging the second surface to produce an image of the second surface.
34. The system of any of clauses 32 to 34 comprising electrolytic jet temperature control means.
35. The system of any of clauses 32 to 35 comprising residual electrolyte removal means for removing residual electrolyte from the second surface before imaging the second surface.
36. The system according to any of clauses 32 to 36 comprising treating means for treating the second surface before imaging the second surface.
37. The system according to any of clauses 32 to 37 comprising movement means for moving the nozzle and/ or the workpiece while removing conductive material, for example planar movement means or rotational movement means or a combination thereof.

## Claims

1. A method of determining the structure of a conductive material comprising:
a. providing a workpiece formed from the conductive material wherein the workpiece has a first surface,
b. removing conductive material from the first surface to form a second surface by means of a charged electrolytic jet which is ejected from a nozzle,
c. imaging the second surface to produce an image of the second surface.

2. The method according to claim 1, further comprising at least one of the following steps:
a. removing a section of the first surface so that another section of the first surface remains;
b. analysing the image of the second surface;
c. analysing the image of the second surface using machine learning;
d. measuring the distance of the second surface from the first surface;
e. determining the surface roughness of the second surface prior to imaging the second surface to produce an image of the second surface;
f. controlling the electrolytic jet temperature;
g. controlling the temperature of the electrolytic jet by controlling the cross sectional area of the electrolytic jet;
h. controlling the temperature of the workpiece;
i. removing residual electrolyte from the second surface before imaging the second surface;
j. treating the second surface, for example wiping or etching the second surface, before imaging the second surface.

3. The method according to any preceding claim wherein the second surface has a Rt of less than 10 µm as determined according to EN ISO 4287:1997, or a Rz of less than 10 µm as determined according to EN ISO 4287:1997 or a Ra of less than 2 µm as determined according to EN ISO 4287:1997, or a combination thereof.

4. The method according to any preceding claim wherein the conductive material is an alloy, for example an alloy comprising one or more of cobalt, chromium, nickel, titanium, aluminium such as a cobalt-chromium alloy, titanium aluminide, or nickel-chromium based alloy for example an austenitic steel.

5. The method according to any preceding claim wherein the charged electrolytic jet has an electrical current density of at least 1 amp per cm² when ejected from the nozzle.

6. The method according to any preceding claim comprising passing a constant current through the electrolytic jet.

7. The method according to claim 6 comprising selecting the constant current passing through the electrolytic jet to control the temperature of the electrolytic jet; and/or determining the distance from the second surface to the first surface by measuring the voltage between the nozzle and the second surface of the workpiece.

8. The method according to any of preceding claims comprising passing a constant voltage between the nozzle and the second surface of the workpiece.

9. The method according to any preceding claim comprising maintaining the nozzle in the same position relative to the workpiece while removing conductive material; or comprising relative movement between the nozzle and the workpiece while removing conductive material, optionally wherein the relative movement between the nozzle and the workpiece is in a planar direction while removing conductive material, and/or the relative movement comprises rotational motion of the nozzle or the workpiece or both.

10. The method according to any preceding claim comprising repeating the steps of removing conductive material a plurality of times thereby forming a plurality of second surfaces, and imaging each of the second surfaces to obtain a plurality of images of the plurality of second surfaces.

11. The method according to any preceding claim comprising using the images as training data to create a machine learning model to determine the structure of the conductive material.

12. The method according to any preceding claim comprising using data obtained from the charged electrolytic jet as training data to create a machine learning model to determine the structure of the conductive material.

13. A method of identifying a part by determining the structure of a conductive material comprising:
a. providing the part formed from the conductive material wherein the part has a first surface,
b. removing conductive material from the first surface to form a second surface by means of a charged electrolytic jet which is ejected from a nozzle,
c. imaging the second surface to produce an image of the second surface,
d. identifying the part from the image of the second surface.

14. A computer-implemented method of training a machine learning method for determining the structure of a conductive material comprising:
a. generating a database of images produced according to the method of any of claims 1 to 11;
b. optionally, incorporating the data obtained from the charged electrolytic jet into the database;
c. collecting a set of data from the database:
d. creating a training set comprising the collected set of data;
e. training the machine learning method to determine the structure of a conductive material using the training set.

15. A computer-implemented method of training a machine learning method for determining the structure of a conductive material comprising:
a. generating a database of data generated from the images produced according to the method of any of claims 1 to 11 and the data obtained from the charged electrolytic jet of claim 12;
b. collecting a set of data from the database;
c. creating a training set comprising the collected set of data,
d. training the machine learning method to determine the removal conditions required to obtain a second surface suitable for imaging using the training set.

16. A system for determining the structure of a conductive material comprising:
a. jet electrochemical machining means for removing material from a first surface of a workpiece to form a second surface by means of a charged electrolytic jet which is ejected from a nozzle; and
b. imaging means for imaging the second surface.

17. A system according to claim 16 further comprising at least one of the following features:
a. distance measuring means for measuring the distance of the second surface from the first surface;
b. roughness measuring means for measuring the roughness of the second surface prior to imaging the second surface to produce an image of the second surface;
c. electrolytic jet temperature control means;
d. residual electrolyte removal means for removing residual electrolyte from the second surface before imaging the second surface;
e. treating means for treating the second surface before imaging the second surface;
f. movement means for moving the nozzle and/ or the workpiece while removing conductive material, for example planar movement means or rotational movement means or a combination thereof.
